# EUROPEAN PATENT APPLICATION

(11) **EP 4 495 478 A1**
(43) Date of publication of application: **22.01.2025**
(21) Application number: 23770912.6
(22) Date of filing: 17.03.2023
(51) Int. Cl.: F21V 23/00, F21V 23/06, F21Y 115/10, F21Y 115/20, F21Y 115/30, F21S 45/00, F21S 45/10, H05K 5/02, H05K 5/03, H05K 7/12, H01R 12/51, H01R 12/58, H01R 13/52

(54) **CIRCUIT UNIT, CIRCUIT UNIT PRODUCTION METHOD, CIRCUIT UNIT ACCOMMODATING STRUCTURE, AND DEVICE COMPRISING CIRCUIT UNIT**

(30) Priority: 18.03.2022 JP 2022044215; 18.03.2022 JP 2022044216; 18.03.2022 JP 2022044217
(71) Applicant: Koito Manufacturing Co., Ltd., Tokyo 141-0001 (JP)
(72) Inventor: NAKAZAWA, Yuichi, Shizuoka-shi, Shizuoka 424-8764 (JP); TOTSUKA, Takahiro, Shizuoka-shi, Shizuoka 424-8764 (JP); KANAMORI, Akitaka, Shizuoka-shi, Shizuoka 424-8764 (JP); TAKII, Naoki, Shizuoka-shi, Shizuoka 424-8764 (JP); NAKAMURA, Toshiyuki, Shizuoka-shi, Shizuoka 424-8764 (JP); OISHI, Takeshi, Shizuoka-shi, Shizuoka 424-8764 (JP); MURAYAMA, Masatsugu, Shizuoka-shi, Shizuoka 424-8764 (JP)
(74) Representative: Cabinet Beau de Loménie
(86) International application number: PCT/JP2023/010585
(87) International publication number: WO 2023/176960

(57) **Abstract**

A connector (152) is mounted on a board (151) on which a circuitry is mounted. The connector (152) includes a terminal (152a) and a connector housing (152b). The terminal (152a) is electrically connected to the circuitry. The connector housing (152b) supports the terminal (152a). The terminal (152a) has a first portion (152a1) that extends in a direction intersecting the board (151), and is in elastic contact with an inner wall of a via hole (151a) formed in the board (151). The connector housing (152b) has a protrusion (152b1) that extends in a direction intersecting the board (151) and is fitted into a fitting hole (151b) formed in the board (151).

## Description

### Field

The presently disclosed subject matter relates to a circuit unit and a method of manufacturing the same. The presently disclosed subject matter also relates to a structure for housing the circuit unit. The presently disclosed subject matter also relates to a device provided with the circuit unit.

### Background

Patent Document 1 discloses a headlamp as an example of a device adapted to be installed in a vehicle as an example of a mobility. The headlamp is provided with a circuit unit including a control circuit configured to control an operation of a light source housed in a housing. A board on which the control circuit and an inner connector are mounted is housed in a casing provided with an outer connector. The control circuit is electrically connected to the inner connector and the outer connector by soldering. The casing is disposed on an outer face of the housing. The electrical connection between the control circuit and the light source is established through the inner connector. The electrical connection between the control circuit and an external device is established through the outer connector.

### Citation List

### Patent Document

Patent Document 1: Japanese Patent Publication No. 2014-082147 A

### Summary of the Invention

### Technical Problem

It is demanded to reduce costs for manufacturing such a circuit unit as well as a structure for housing the circuit unit and a device provided with the circuit unit.

### Solution to Problem

A first illustrative aspect of the presently disclosed subject matter provides a circuit unit, comprising:
a board on which a circuitry is mounted; and
a connector mounted on the board,
wherein the connector includes:
   a conductive terminal electrically connected to the circuitry; and
   a connector housing supporting the conductive terminal,
wherein the conductive terminal has a portion that extends in a direction intersecting the board, and is in elastic contact with an inner wall of a via hole formed in the board; and
wherein the connector housing has a protrusion that extends in a direction intersecting the board, and is fitted into a hole formed in the board.

According to the configuration of the first illustrative aspect, electrical connection between the conductive terminal of the connector and the circuitry is established by press-fitting the conductive terminal of the connector into the via hole. Since it is not necessary to additionally use solder, conductive adhesive, screw, or the like, simplification of manufacturing equipment and process management, alleviation of environmental load, material reduction or the like can be realized.

On the other hand, supporting strength of the board for the conductive terminal is inevitably reduced because of the non-use of solder, a conductive adhesive, a screw, or the like. However, since the protrusion provided in the connector housing supporting the conductive terminal is press-fitted into the hole formed in the board, the reduction in the supporting strength can be compensated. In addition, since the conductive terminal and the protrusion are press-fitted into the board in the same direction and at the same time, it is possible to eliminate the necessity of adding at least one of another component, another facility, and another process to compensate for the reduction in the supporting strength.

As a result, it is possible to reduce the manufacturing cost of the circuit unit as well as the manufacturing cost of the housing structure for the circuit unit and the device provided with the circuit unit.

Accordingly, a second illustrative aspect of the presently disclosed subject matter provides a method of manufacturing a circuit unit, comprising:
preparing a board on which a circuitry is to be mounted;
preparing a connector including a conductive terminal configured to be electrically connected to the circuitry, a connector housing supporting the conductive terminal, and a protrusion formed on the connector housing;
mounting the connector onto the board such that the conductive terminal and the protrusion extend in a direction intersecting the board, thereby bringing the conductive terminal in elastic contact with an inner wall of a via hole formed in the board while fitting the protrusion into a hole formed in the board.

Accordingly, a third illustrative aspect of the presently disclosed subject matter provides a housing structure, comprising:
a housing defining a space; and
a circuit unit,
wherein the circuit unit includes:
   a board, on which a circuitry is mounted, being housed in the space; and
   a connector mounted on the board,
wherein the connector includes:
   a conductive terminal electrically connected to the circuitry; and
   a connector housing supporting the conductive terminal,
wherein the conductive terminal includes:
   a first portion extending in a first direction intersecting the board, and being in elastic contact with an inner wall of a via hole formed in the board; and
   a second portion extending in a second direction, and being accessible from an outside of the space through an opening formed in the housing;
wherein the connector housing has a protrusion that extends in the first direction, and is fitted into a hole formed in the board.

Accordingly, a fourth illustrative aspect of the presently disclosed subject matter provides a device, comprising:
a driven element;
a housing defining a space; and
a circuit unit provided with a circuitry that is electrically connected to the driven element,
wherein the circuit unit includes:
   a board, on which a circuitry is mounted, being housed in the space; and
   a connector mounted on the board,
wherein the connector includes:
   a conductive terminal electrically connected to the circuitry; and
   a connector housing supporting the conductive terminal,
wherein the conductive terminal includes:
   a first portion extending in a first direction intersecting the board, and being in elastic contact with an inner wall of a via hole formed in the board; and
   a second portion extending in a second direction, and being accessible from an outside of the space through an opening formed in the housing;
wherein the connector housing has a protrusion that extends in the first direction, and is fitted into a hole formed in the board.

A fifth illustrative aspect of the presently disclosed subject matter provides a housing structure, comprising:
a housing defining a space; and
a circuit unit,
wherein the circuit unit includes:
   a board, on which a circuitry is mounted, being housed in the space;
   a connector mounted on the board;
   a cover covering at least a portion of the circuitry while being engaged with the connector; and
   a fastening member fastening the cover with the housing,
wherein the connector includes a conductive terminal electrically connected to the circuitry;
wherein the conductive terminal includes a portion that extends in a first direction along the board and is accessible from an outside of the space through an opening formed in the housing; and
wherein the fastening member fastens the cover with the housing at a position which is closer to one of edges of the board in the first direction that is farther from the connector than to the other one of the edges that is closer to the connector.

A sixth illustrative aspect of the presently disclosed subject matter provides a device, comprising:
a driven element;
a housing defining a space; and
a circuit unit provided with a circuitry that is electrically connected to the driven element,
wherein the circuit unit includes:
   a board, on which a circuitry is mounted, being housed in the space;
   a connector mounted on the board;
   a cover covering at least a portion of the circuitry while being engaged with the connector; and
   a fastening member fastening the cover with the housing,
wherein the connector includes a conductive terminal electrically connected to the circuitry;
wherein the conductive terminal includes a portion that extends in a first direction along the board and is accessible from an outside of the space through an opening formed in the housing; and
wherein the fastening member fastens the cover with the housing at a position which is closer to one of edges of the board in the first direction that is farther from the connector than to the other one of the edges that is closer to the connector.

For example, at the time of fitting with a mating connector, an external stress is applied to the connector. According to the configuration of each of the fifth and sixth illustrative aspects, the stress is transmitted to the cover engaged with the connector, and is released to the housing at the fastening position with the housing where is relatively distant from the connector. Thus, local concentration of the stress applied to the connector onto the board can be made difficult to be occurred.

Accordingly, it is possible to eliminate the need for at least one of another component, another facility, and another process for protecting the circuitry mounted on the board from the external stress applied to the connector. As a result, it is possible to reduce the manufacturing cost of the circuit unit as well as the manufacturing cost of the housing structure for the circuit unit and the device provided with the circuit unit.

A seventh illustrative aspect of the presently disclosed subject matter provides a housing structure, comprising:
a housing defining a space; and
a circuit unit,
wherein the circuit unit includes:
   a board, on which a circuitry is mounted, being housed in the space; and
   a connector mounted on the board;
   a cover covering at least a portion of the circuitry; and
wherein the connector includes a conductive terminal electrically connected to the circuitry;
wherein the conductive terminal includes a portion that extends in a first direction along the board and is accessible from an outside of the space through an opening formed in the housing;
wherein the housing has a guide groove extending in the first direction; and
wherein the cover has a flange portion disposed in the guide groove.

An eighth illustrative aspect of the presently disclosed subject matter provides a device, comprising:
a driven element;
a housing defining a space; and
a circuit unit provided with a circuitry that is electrically connected to the driven element,
wherein the circuit unit includes:
   a board, on which a circuitry is mounted, being housed in the space; and
   a connector mounted on the board;
   a cover covering at least a portion of the circuitry; and
wherein the connector includes a conductive terminal electrically connected to the circuitry;
wherein the conductive terminal includes a portion that extends in a first direction along the board and is accessible from an outside of the space through an opening formed in the housing;
wherein the housing has a guide groove extending in the first direction; and
wherein the cover has a flange portion disposed in the guide groove.

According to the configuration of each of the seventh and eighth illustrative aspects, by sliding the circuit unit along the guide groove extending in the same direction as a portion of the terminal in the connector that is to be subjected to access from the outside of the space, it is possible to establish a condition that the portion of the terminal of the connector can be easily accessed from the outside of the space. Since the efficiency of the operation of installing the circuit unit in the housing is improved, the manufacturing cost of the housing structure for the circuit unit as well as the device provided with the circuit unit can be reduced.

### Brief Description of Drawings

FIG. 1 illustrates a lighting device provided with a circuit unit according to one embodiment.
FIG. 2 is a perspective view illustrating an appearance of the circuit unit according to one embodiment.
FIG. 3 is an exploded perspective view illustrating a configuration of the circuit unit of FIG. 2.
FIG. 4 illustrates an appearance of a connector as viewed from a direction of an arrow IV of FIG. 1.
FIG. 5 illustrates a cross section viewed from an arrowed direction along a line V-V of FIG. 4.
FIG. 6 illustrates a cross section viewed from an arrowed direction along a line VI-VI of FIG. 4.
FIG. 7 illustrates a cross section viewed from an arrowed direction along a line VII-VII of FIG. 6.
FIG. 8 illustrates a cross section viewed from an arrowed direction along a line VIII-VIII of FIG. 6.
FIG. 9 illustrates a lighting device provided with a circuit unit according to another embodiment.

### Description of Embodiments

Exemplary embodiments will be described below in detail with reference to the accompanying drawings. In each of the drawings used in the following descriptions, the scale is changed as required in order to make each member have a recognizable size.

In the accompanying drawings, an arrow F represents a forward direction of the illustrated structure. An arrow B represents a rearward direction of the illustrated structure. An arrow U represents an upward direction of the illustrated structure. An arrow D represents a downward direction of the illustrated structure. An arrow R represents a rightward direction of the illustrated structure. An arrow L represents a leftward direction of the illustrated structure. The expression according to these directions is intended to be used for convenience of explanation and is not intended to limit the attitude of the structure at the time of actual use.

As used herein, the term "front-rear direction" means a direction along the forward direction and the rearward direction described above. As used herein, the term "up-down direction" means a direction along the upward direction and the downward direction described above. As used herein, the term "left-right direction" means a direction along the leftward and the rightward direction described above.

As used herein, the expression "extending in the front-rear direction" includes extending at an inclination with respect to the front-rear direction, and means extending at an inclination closer to the front-rear direction than the up-down direction and the left-right direction.

As used herein, the expression "extending in the up-down direction" includes extending at an inclination with respect to the up-down direction, and means extending at an inclination closer to the up-down direction than the front-rear direction and the left-right direction.

As used herein, the expression "extending in the left-right direction" includes extending at an inclination with respect to the left-right direction, and means extending at an inclination closer to the left-right direction than the front-rear direction and the up-down direction.

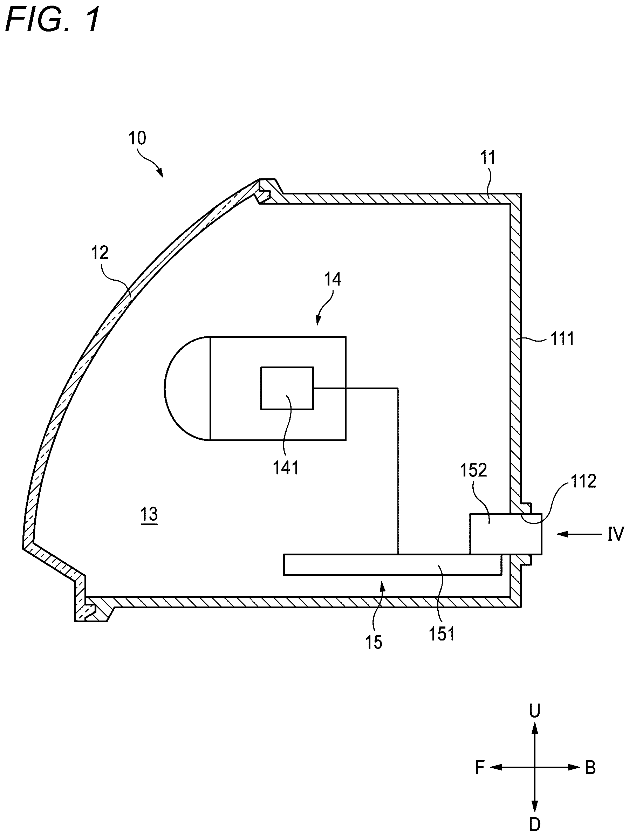

FIG. 1 schematically illustrates a configuration of a lighting device 10 according to an embodiment. The lighting device 10 according to the present example is configured to be installed in a vehicle. There is no limitation as to the number of wheels provided in the vehicle. The vehicle is an example of a mobility.

The lighting device 10 includes a housing 11 and a translucent cover 12. The housing 11 defines a lamp chamber 13 with the translucent cover. The lamp chamber 13 is an example of a space defined by the housing.

The lighting device 10 includes a lamp unit 14. The lamp unit 14 includes a light source 141. The light source 141 is configured to emit visible light. The light source 141 may be a lamp light source or a semiconductor light emitting element. Examples of the semiconductor light emitting element include a light emitting diode, a laser diode, an electroluminescent element, and the like. The light source 141 is configured to emit light including a wavelength in a visible light range. The light emitted from the light source 141 passes through the translucent cover 12 and is directed to the outside of the vehicle.

The lighting device 10 includes a circuit unit 15. The circuit unit 15 includes a board 151 and a connector 152. The board 151 is housed in the lamp chamber 13. The connector 152 is mounted on the board 151.

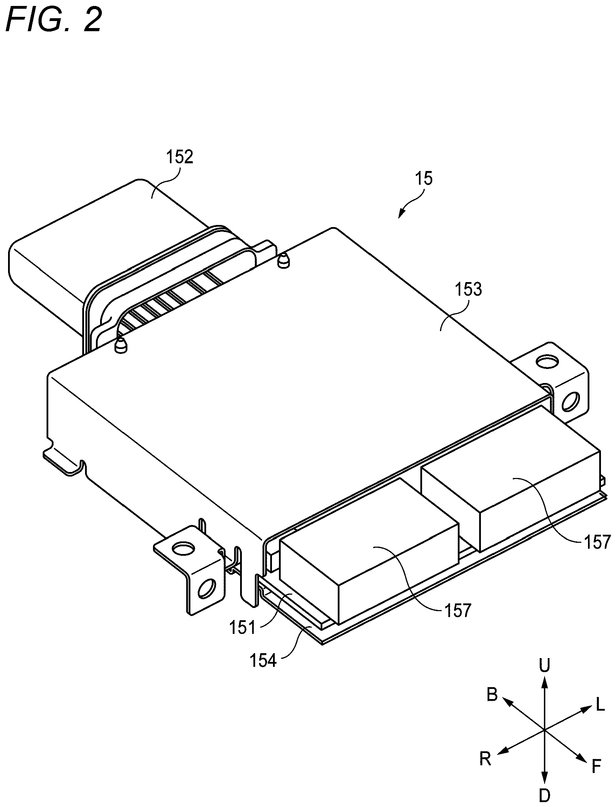

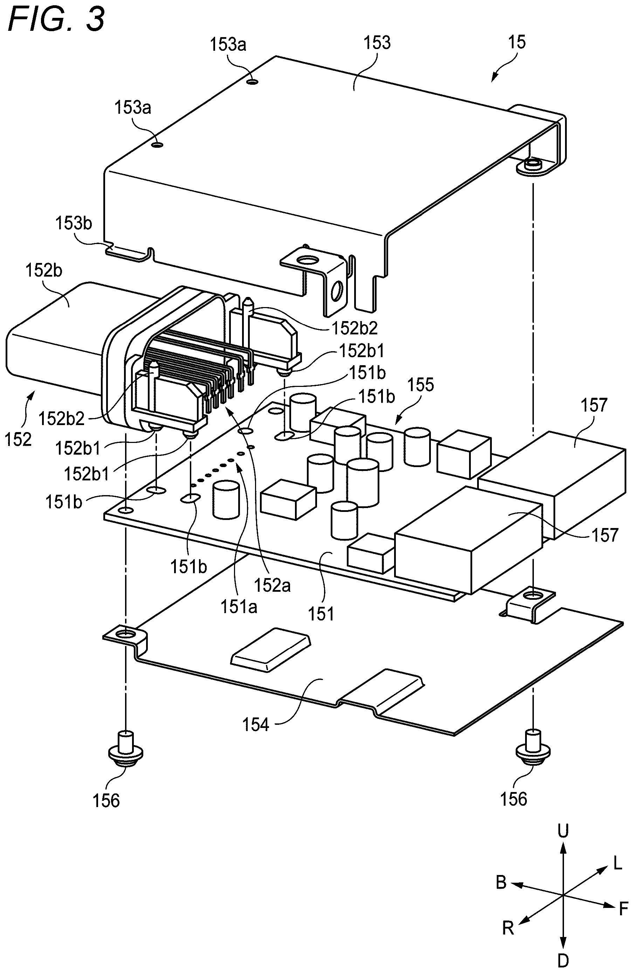

The configuration of the circuit unit 15 will be described in detail with reference to FIGS. 2 and 3. The circuit unit 15 includes an upper cover 153 and a lower cover 154. The upper cover 153 and the lower cover 154 are fastened by a fastening member 156 so as to clamp the board 151 therebetween. Accordingly, the upper cover 153 and the lower cover 154 cover at least a portion of circuitry 155 that is mounted on the board 151. Each of the upper cover 153 and the lower cover 154 is preferably made of metal from the viewpoint of the radio wave shielding capability for the circuitry 155. The lower cover 154 may be omitted.

The circuit unit 15 includes an inner connector 157. The circuitry 155 is electrically connected to the light source 141 of the lamp unit 14 via the inner connector 157. The circuitry 155 includes circuit elements for driving the light source 141. The light source 141 is an example of a driven element.

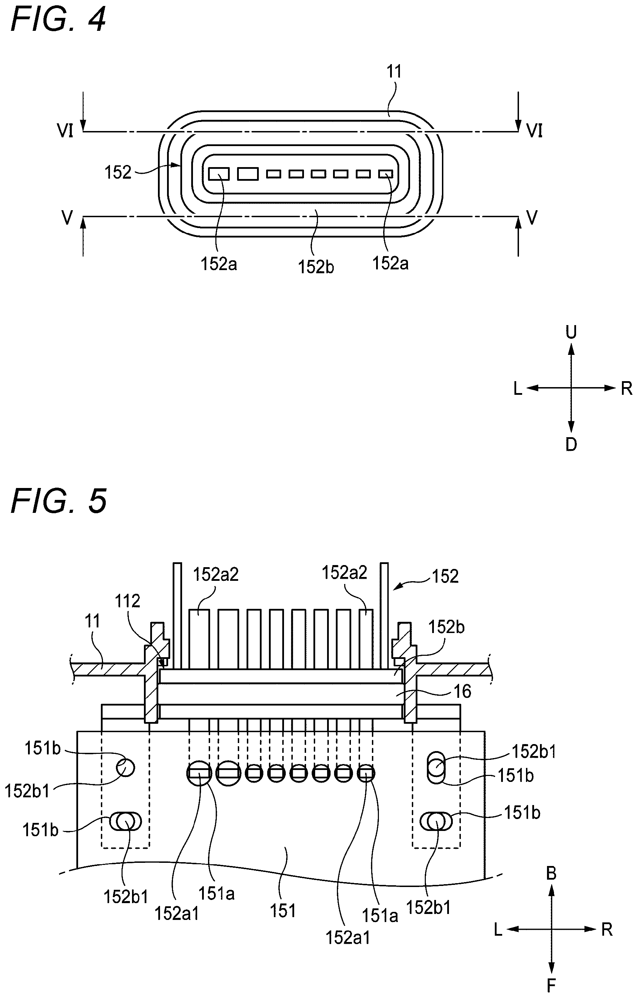

As illustrated in FIG. 1, an opening 112 is formed in a back face 111 of the housing 11. A portion of the connector 152 of the circuit unit 15 is disposed within the opening 112. FIG. 4 illustrates a configuration as viewed from the direction of an arrow IV in FIG. 1. In the figure, the back face 111 is not illustrated.

The connector 152 includes multiple terminals 152a and a connector housing 152b. The connector housing 152b is formed of an electrically insulative material. The multiple terminals 152a of the connector are supported by the connector housing 152b while being electrically insulated from one another. The multiple terminals 152a are arranged in the left-right direction.

In this example, each of the terminals 152a is formed of a conductive material and is electrically connected to the circuitry 155. However, all the terminals 152a may not be formed of the conductive material and electrically connected to the circuitry 155. In other words, the multiple terminals 152a may include a dummy terminal.

FIG. 5 schematically illustrates a cross section along a line V-V in FIG. 4 and viewed from an arrowed direction. As illustrated in FIGS. 3 and 5, each terminal 152a has a first portion 152a1. The first portion 152a1 extends in the up-down direction. The up-down direction is an example of a direction intersecting the board 151.

Multiple via holes 151a are formed in the board 151. In this example, each via hole 151a has an inner wall covered with a conductive material. In this example, each via hole 151a is a through hole. However, at least one of the via holes 151a may be a bottomed hole.

The first portion 152a1 of each terminal 152a is associated with one of the via holes 151a and is inserted into the same.

Each terminal 152a is configured as a press-fit terminal. In other words, the first portion 152a1 includes a portion that initially has a width dimension larger than the width dimension of the associated via hole 151a, and that is elastically deformable. Accordingly, the terminal 152a is inserted into the via hole 151a through the press-fitting.

It should be noted that, as used herein, the term "press-fitting" means an operation of inserting a member into a hole or a recess having a width dimension that is less than a width of the member.

As a result, the first portion 152a1 is in elastic contact with the inner wall of the via hole 151a. Accordingly, electrical connection between the terminal 152a and the circuitry 155 is established via the conductive material that covers the inner wall of the via hole 151a.

Each terminal 152a has a second portion 152a2. The second portion 152a2 extends in the front-rear direction. The front-rear direction is an example of a direction along the board 151. The second portion 152a2 is a portion that is accessible from the outside of the lamp chamber 13 through the opening 112 formed in the housing 11.

The second portion 152a2 is a portion to be coupled to a terminal of a mating connector (not illustrated). As an example, the mating connector may be electrically connected to a device located outside the lighting device 10. As another example, the mating connector may be a jumper connection connector that selectively establishes electrical connection between specific terminals.

As illustrated in FIG. 3, the connector housing 152b has multiple protrusions 152b1. Each protrusion 152b1 extends in the up-down direction. In other words, each protrusion 152b1 extends in a direction intersecting the board 151. In this example, four protrusions 152b1 are provided. However, any one of the protrusions 152b1 may be omitted.

On the other hand, the board 151 is formed with multiple fitting holes 151b. In this example, each fitting hole 151b is a through hole. However, at least one of the fitting holes 151b may be a bottomed hole.

As illustrated in FIG. 5, each protrusion 152b1 is associated with one of the multiple fitting holes 151b and is press-fitted into the same.

The circuit unit 15 having the above-described configuration can be manufactured by the following procedure.

First, a board 151 having multiple via holes 151a and multiple fitting holes 151b formed therein is prepared. The circuitry 155 may be mounted on the board 151 at this time point or may be mounted in a later step.

Subsequently, the connector 152 is mounted on the board 151. Specifically, the connector 152 is mounted on the board 151 such that the first portion 152a1 of each terminal 152a and each protrusion 152b1 extend in a direction intersecting the board 151. Accordingly, the press-fitting of each first portion 152a1 into the corresponding via hole 151a and the press-fitting of each protrusion 152b1 into the corresponding fitting hole 151b are performed at the same time. The fixation of the connector 152 to the board 151 and the electrical connection to the circuitry 155 are made by the elastic contact of the first portion 152a1 with the inner wall of the fitting hole 151b and the fitting of the protrusion 152b1 into the fitting hole 151b.

According to the configuration of the present embodiment, electrical connection between the connector 152 and the circuitry 155 is established by press-fitting the terminal 152a of the connector 152 into the via hole 151a. Since it is not necessary to additionally use solder, conductive adhesive, screw, or the like, simplification of manufacturing equipment and process management, alleviation of environmental load, material reduction or the like can be realized.

On the other hand, supporting strength of the board 151 for the terminal 152a is inevitably reduced because of the non-use of solder, a conductive adhesive, a screw, or the like. However, since the protrusion 152b1 provided in the connector housing 152b supporting the terminal 152a is press-fitted into the fitting hole 151b formed in the board 151, the reduction in the supporting strength can be compensated. In addition, since the terminal 152a and the protrusion 152b1 are press-fitted into the board 151 in the same direction and at the same time, it is possible to eliminate the necessity of adding at least one of another component, another facility, and another process to compensate for the reduction in the supporting strength.

As a result, it is possible to reduce the manufacturing cost of the circuit unit 15 as well as the manufacturing cost of the lighting device 10 provided with the circuit unit 15.

As illustrated in FIG. 5, the protrusion 152b1 press-fitted into the fitting hole 151b formed in the board 151 has a circular cross-sectional shape. However, the cross-sectional shape may be an arbitrary polygonal shape as long as the press-fitting with respect to the fitting hole 151b is enabled.

In the present embodiment, a press-fit terminal having a simple configuration is used as the terminal 152a of the connector 152. This fact may also contribute to a reduction in the manufacturing cost of the circuit unit 15.

However, the configuration of the first portion 152a1 of the terminal 152a that is to be press-fitted into the via hole 151a may be appropriately changed as long as the first portion 152a1 can be brought into elastic contact with the inner wall of the via hole 151a to establish electrical connection with the circuitry 155. For example, the first portion 152a1 may be configured to include a shaft member extending in a direction intersecting the board 151, and a movable member urged by a spring to a radially outer side of the shaft member. When the first portion 152a1 is press-fitted into the via hole 151a, the movable member is displaced radially inward of the shaft member against the urging force of the spring so that the movable member is brought into elastic contact with the inner wall of the via hole 151a.

As illustrated in FIG. 1, in the lighting device 10 according to the present embodiment, the board 151 of the circuit unit 15 is housed in the housing 11, and the connector 152 is inserted into the opening 112 from the inside of the housing 11, whereby the circuit unit 15 is installed in the lighting device 10.

As illustrated in FIG. 5, the lighting device 10 includes a sealing member 16. The sealing member 16 is formed of an elastic material. The material and the shape of the sealing member 16 are determined so as to establish waterproof and dustproof properties with respect to the lamp chamber 13. Examples of the sealing member 16 include a gasket and an O-ring. The sealing member 16 is attached to the connector 152 so as to situate between the connector housing 152b and the opening 112.

According to such a configuration, by disposing the sealing member 16 between the connector housing 152b and the opening 112 of the housing 11, it is possible to secure the waterproof and dustproof properties of the lamp unit 14 disposed in the lamp chamber 13 with respect to the light source 141. In other words, it is not necessary to provide a configuration for waterproof and dustproof on a path electrically connecting the circuit unit 15 and the light source 141 that are housed in the housing 11. Since the number of parts and steps for establishing the waterproof and dustproof properties can be reduced, the manufacturing cost of the lighting device 10 can also be reduced.

As described above, the electrical connection between the light source 141 and the circuit unit 15 is established via the inner connector 157. The extending direction of the conductive terminal included in the inner connector 157 can be arbitrarily determined. However, it is preferably coincident with the extending direction of the second portion 152a2 of the terminal 152a in the connector 152.

According to such a configuration, the direction of the work for inserting the connector housing 152b into the opening 112 of the housing 11 coincides with the direction of the work for fitting a connector that is electrically connected to the light source 141 with the inner connector 157. Accordingly, since the efficiency of the assembling work is improved, the manufacturing cost of the lighting device 10 can be reduced.

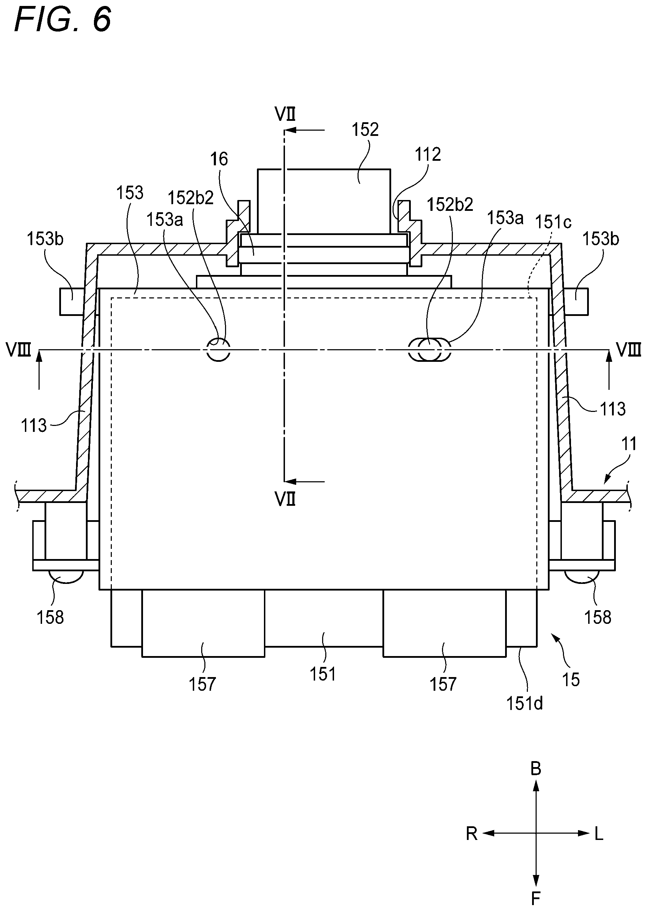

FIG. 6 illustrates a cross section along the line VI-VI in FIG. 4 as viewed from the arrowed direction. As illustrated in FIGS. 3 and 6, the connector housing 152b of the connector 152 has a pair of protrusions 152b2. Each protrusion 152b2 extends in the up-down direction.

On the other hand, the upper cover 153, a pair of holes 153a are formed. When the upper cover 153 is fastened to the board 151 by the fastening member 156, each protrusion 152b2 engages with an associated one of the holes 153a.

As illustrated in FIG. 6, the circuit unit 15 includes a fastening member 158. The fastening member 158 fastens the upper cover 153 to the housing 11 thereby fixing the circuit unit 15 to the housing 11.

Specifically, the fastening member 158 fastens the upper cover 153 to the housing 11 at a position which is closer to a front edge 151d of the board 151 that is farther from the connector 152 than to a rear edge 151c of the board 151 that is closer to the connector 152.

For example, at the time of fitting with a mating connector, an external stress is applied to the connector 152. According to the configuration as described above, the stress is transmitted to the upper cover 153 through the protrusion 152b2 of the connector housing 152b, and is released to the housing 11 at the fastening position with the housing 11 where is relatively distant from the connector 152. Thus, local concentration of the stress applied to the connector 152 onto the board 151 can be made difficult to be occurred.

Accordingly, it is possible to eliminate the need for at least one of another component, another facility, and another process for protecting the circuitry 155 mounted on the board 151 from the external stress applied to the connector 152. As a result, it is possible to reduce the manufacturing cost of the lighting device 10 provided with the circuit unit 15.

In the present embodiment, the protrusion 152b2 is engaged with the upper cover 153 at a position which is closer to the rear edge 151c of the board 151 that is closer to the connector 152 than to the front edge 151d of the board 151 that is farther from the connector 152.

According to such a configuration, since the stress applied to the connector 152 can be released to the upper cover 153 at an early stage, the local concentration of the stress onto the board 151 can be easily alleviated.

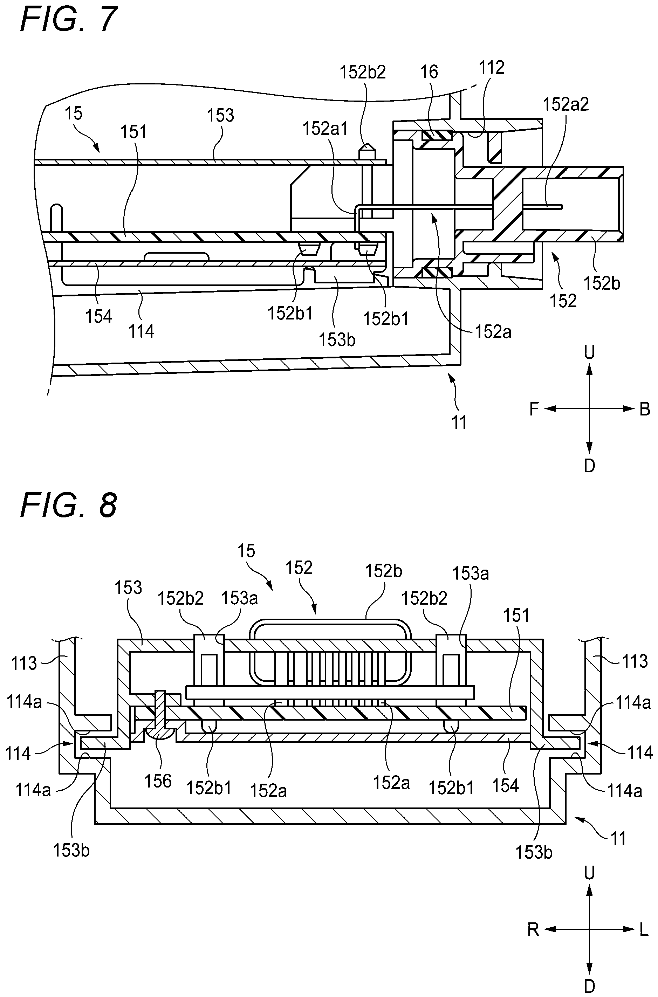

FIG. 7 illustrates a cross section along the line VII-VII in FIG. 6 as viewed from the arrowed direction. FIG. 8 illustrates a cross section along the line VIII-VIII in FIG. 6 as viewed from the arrowed direction.

The housing 11 has a pair of guide walls 113. The guide walls 113 face each other in the left-right direction. A guide groove 114 is formed in each guide wall 113. The guide groove 114 extends in the front-rear direction. In other words, the guide groove 114 extends in the same direction as the direction in which the second portion 152a2 of the terminal 152a extends in the connector 152.

On the other hand, the upper cover 153 of the circuit unit 15 has multiple flange portions 153b. Each flange portion 153b extends in the left-right direction.

The circuit unit 15 is attached to the housing 11 by being inserted between the pair of guide walls 113 from the front side. As illustrated in FIG. 6, the distance between the guide walls 113 in the left-right direction is narrowed as approaching the back face 111. Accordingly, the connector 152 is guided to the opening 112 while the positioning relative to the left-right direction is performed.

At this time, the flange portion 153b of the upper cover 153 enters the corresponding guide groove 114. Each guide groove 114 has a pair of inner walls 114a facing each other in the up-down direction. Accordingly, the connector 152 is guided to the opening 112 while the positioning relative to the up-down direction is performed.

According to the configuration as described above, by sliding the circuit unit 15 along the guide groove 114 extending in the same direction as the second portion 152a2 of the terminal 152a in the connector 152, it is possible to establish a condition that the terminal 152a of the connector 152 can be easily accessed from the outside of the lamp chamber 13. Since the efficiency of the operation of installing the circuit unit 15 in the housing 11 is improved, the manufacturing cost of the lighting device 10 can be reduced.

As illustrated in FIG. 8, under a condition that the circuit unit 15 is attached to the housing 11, a gap is formed between the flange portion 153b of the upper cover 153 and the inner wall 114a of the guide groove 114 in the up-down direction. The up-down direction in this case is an example of a direction intersecting the direction in which the guide groove 114 extends.

According to such a configuration, when an external force is applied to the connector 152 as described above, the upper cover 153 is allowed to be displaced in the up-down direction. Thus, the external force can be easily released to the position fastened with the housing 11 where is relatively distant from the connector 152. Accordingly, it is possible to enhance the function of preventing the stress from being locally concentrated on the board 151.

As illustrated in FIG. 7, the width of the guide groove 114 in the up-down direction is narrowed toward the opening 112. Specifically, both the pair of inner walls 114a are formed as sloped faces. The angle formed by the sloped faces may be, for example, 3° to 5°. According to such a configuration, it is possible to enhance the positioning function of the connector 152 relative to the up-down direction described above.

If a desired angle formed by the inner walls 114a can be secured, one of the inner walls 114a may be a flat face. In a case where the inner walls 114a face each other in the up-down direction (vertical direction) as in this example, it is preferable that a lower one of the inner walls 114a is made flat. According to such a configuration, since it is possible to cause the lower one of the inner walls 114a to support the upper cover 153 after the circuit unit 15 is attached to the housing 11, the stability of the structure is enhanced.

As described above, the pair of protrusions 152b2 formed in the connector housing 152b is engaged with the upper cover 153 via the pair of holes 153a. Accordingly, when the operation of inserting the connector 152 into the opening 112 of the housing 11 while holding the upper cover 153 is performed, transmission of the force to the connector 152 can be facilitated. This configuration is advantageous when the resistance to the insertion of the connector 152 is relatively high (for example, when the sealing member 16 is disposed between the connector housing 152b and the opening 112).

In this example, the protrusion 152b2 for releasing the external force applied to the connector 152 toward the upper cover 153 is also used to improve the workability for inserting the connector 152 into the opening 112. However, the two functions may be realized by independent engagement structures between the connector 152 and the upper cover 153.

Although the direction that the upper cover 153 is fastened to the housing 11 with the fastening member 158 is arbitrary, it is preferable to perform the fastening operation along the extending direction of the guide groove 114, as illustrated in FIG. 6.

According to such a configuration, the direction of the work for inserting the connector housing 152b into the opening 112 of the housing 11 coincides with the direction of the work for fastening the upper cover 153 to the housing 11. Accordingly, the efficiency of the work for attaching the circuit unit 15 to the housing 11 is improved, which can contribute to reduction in the manufacturing cost of the lighting device 10.

The above embodiments are merely illustrative for facilitating understanding of the presently disclosed subject matter. The configuration according to each of the above embodiments can be appropriately modified without departing from the scope of the presently disclosed subject matter.

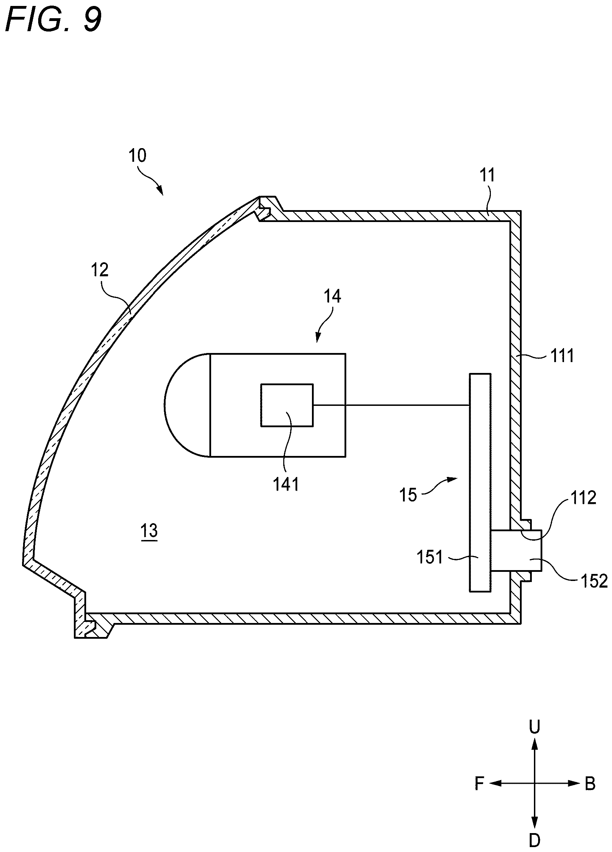

In the above embodiment, the first portion 152a1 of the terminal 152a (i.e., a portion of the connector 152 that is accessible from the outside of the lamp chamber 13 through the opening 112 of the housing 11) extends in a direction along the board 151. However, the attitudes of the board 151 and the connector 152 may have a relationship as illustrated in FIG. 9. In this example, both the first portion 152a1 and the second portion 152a2 of the terminal 152a extend in a direction intersecting the board 151.

In the above embodiment, the connector 152 of the circuit unit 15 is inserted into the opening 112 formed in the back face 111 of the housing 11. However, the position of the opening 112 may be appropriately determined according to the specification of the lighting device 10. The relationship between the attitudes of the board 151 and the connector 152 can also be appropriately determined.

In the above embodiment, the circuitry 155 mounted on the board 151 of the circuit unit 15 is electrically connected to the light source 141 of the lamp unit 14. However, the circuitry 155 may be electrically connected to a device that dissipates heat generated from the light source 141, a device that changes the direction of light emitted from the light source 141, a device that changes the light distribution pattern formed by light emitted from the light source 141, and the like. Each of these devices is also an example of the driven element.

The circuit unit 15 does not have to be installed in the lighting device 10. The circuitry 155 may control the operation of a sensor housed in the space defined by the housing 11. In other words, the circuit unit 15 may be installed in a sensor device for acquiring prescribed information. Examples of the sensor include a LiDAR (Light Detection and Ranging) sensor, a camera, a millimeter wave radar, an ultrasonic sensor, a thermal sensor, and the like. Each of these sensors is also an example of the driven element.

The lighting device 10 and the sensor device described above may be installed in a mobility other than the vehicle. Examples of another mobility include an aircraft, an airframe, a ship, and the like. The mobility may not require a driver.

The lighting device 10 and the sensor device described above do not have to be installed in a mobility. For example, the lighting device 10 and the above-described sensor device can be incorporated in a system installed in a house, a facility, a traffic infrastructure, or the like and operating in response to an object entering a specific area. The lighting device 10 is also applicable to a device for temporarily displaying a prescribed figure, character, marker, or the like on a specific road surface or a wall surface.

The circuit unit 15 does not have to be electrically connected to a specific driven element. In this case, the housing 11 having the opening 112 may serve as a housing structure for the circuit unit 15. With the configuration according to the presently disclosed subject matter, the manufacturing cost of the housing structure can also be reduced.

The present application is based on Japanese Patent Application No. 2022-044215 filed on March 18, 2022, Japanese Patent Application No. 2022-044216 filed on March 18, 2022, and Japanese Patent Application No. 2022-044217 filed on March 18, 2022, the entire contents of which are incorporated herein by reference.

## Claims

1. A circuit unit, comprising:
a board on which a circuitry is mounted; and
a connector mounted on the board,
wherein the connector includes:
a conductive terminal electrically connected to the circuitry; and
a connector housing supporting the conductive terminal,
wherein the conductive terminal has a portion that extends in a direction intersecting the board, and is in elastic contact with an inner wall of a via hole formed in the board; and
wherein the connector housing has a protrusion that extends in a direction intersecting the board, and is fitted into a hole formed in the board.

2. The circuit unit according to claim 1,
wherein the conductive terminal is a press-fit terminal.

3. A method of manufacturing a circuit unit, comprising:
preparing a board on which a circuitry is to be mounted;
preparing a connector including a conductive terminal configured to be electrically connected to the circuitry, a connector housing supporting the conductive terminal, and a protrusion formed on the connector housing;
mounting the connector onto the board such that the conductive terminal and the protrusion extend in a direction intersecting the board, thereby bringing the conductive terminal in elastic contact with an inner wall of a via hole formed in the board while fitting the protrusion into a hole formed in the board.

4. A housing structure, comprising:
a housing defining a space; and
a circuit unit,
wherein the circuit unit includes:
a board, on which a circuitry is mounted, being housed in the space; and
a connector mounted on the board,
wherein the connector includes:
a conductive terminal electrically connected to the circuitry; and
a connector housing supporting the conductive terminal,
wherein the conductive terminal includes:
a first portion extending in a first direction intersecting the board, and being in elastic contact with an inner wall of a via hole formed in the board; and
a second portion extending in a second direction, and being accessible from an outside of the space through an opening formed in the housing;
wherein the connector housing has a protrusion that extends in the first direction, and is fitted into a hole formed in the board.

5. A device, comprising:
a driven element;
a housing defining a space; and
a circuit unit provided with a circuitry that is electrically connected to the driven element,
wherein the circuit unit includes:
a board, on which a circuitry is mounted, being housed in the space; and
a connector mounted on the board,
wherein the connector includes:
a conductive terminal electrically connected to the circuitry; and
a connector housing supporting the conductive terminal,
wherein the conductive terminal includes:
a first portion extending in a first direction intersecting the board, and being in elastic contact with an inner wall of a via hole formed in the board; and
a second portion extending in a second direction, and being accessible from an outside of the space through an opening formed in the housing;
wherein the connector housing has a protrusion that extends in the first direction, and is fitted into a hole formed in the board.

6. The device according to claim 5, further comprising:
a sealing member disposed between the connector housing and the opening.

7. The device according to claim 5 or 6,
wherein the second direction is a direction along the board; and
wherein electrical connection between the driven element and the circuit unit is established through a conductive terminal extending in the second direction.

8. The device according to any one of claims 5 to 7,
wherein the driven element is a light source.

9. The device according to any one of claims 5 to 8, being adapted to be installed in a mobility.

10. A housing structure, comprising:
a housing defining a space; and
a circuit unit,
wherein the circuit unit includes:
a board, on which a circuitry is mounted, being housed in the space;
a connector mounted on the board;
a cover covering at least a portion of the circuitry while being engaged with the connector; and
a fastening member fastening the cover with the housing,
wherein the connector includes a conductive terminal electrically connected to the circuitry;
wherein the conductive terminal includes a portion that extends in a first direction along the board and is accessible from an outside of the space through an opening formed in the housing; and
wherein the fastening member fastens the cover with the housing at a position which is closer to one of edges of the board in the first direction that is farther from the connector than to the other one of the edges that is closer to the connector.

11. A device, comprising:
a driven element;
a housing defining a space; and
a circuit unit provided with a circuitry that is electrically connected to the driven element,
wherein the circuit unit includes:
a board, on which a circuitry is mounted, being housed in the space;
a connector mounted on the board;
a cover covering at least a portion of the circuitry while being engaged with the connector; and
a fastening member fastening the cover with the housing,
wherein the connector includes a conductive terminal electrically connected to the circuitry;
wherein the conductive terminal includes a portion that extends in a first direction along the board and is accessible from an outside of the space through an opening formed in the housing; and
wherein the fastening member fastens the cover with the housing at a position which is closer to one of edges of the board in the first direction that is farther from the connector than to the other one of the edges that is closer to the connector.

12. The device according to claim 11,
wherein the connector has a protrusion that extends in a second direction intersecting the first direction, and engages with the cover at a position closer to the other one of the edges than the one of the edges.

13. The device according to claim 11 or 12,
wherein the housing has a guide groove extending in the first direction;
wherein the cover has a flange portion disposed in the guide groove; and
wherein a gap is formed between the flange portion and an inner wall of the guide groove relative to a second direction intersecting the first direction.

14. The device according to any one of claims 11 to 13,
wherein the fastening member fastens the cover with the housing along the first direction.

15. The device according to any one of claims 11 to 14, further comprising:
a sealing member disposed between the connector housing and the opening.

16. The device according to any one of claims 11 to 15,
wherein the driven element is a light source.

17. The device according to any one of claims 11 to 16, being adapted to be installed in a mobility.

18. A housing structure, comprising:
a housing defining a space; and
a circuit unit,
wherein the circuit unit includes:
a board, on which a circuitry is mounted, being housed in the space; and
a connector mounted on the board;
a cover covering at least a portion of the circuitry; and
wherein the connector includes a conductive terminal electrically connected to the circuitry;
wherein the conductive terminal includes a portion that extends in a first direction along the board and is accessible from an outside of the space through an opening formed in the housing;
wherein the housing has a guide groove extending in the first direction; and
wherein the cover has a flange portion disposed in the guide groove.

19. A device, comprising:
a driven element;
a housing defining a space; and
a circuit unit provided with a circuitry that is electrically connected to the driven element,
wherein the circuit unit includes:
a board, on which a circuitry is mounted, being housed in the space; and
a connector mounted on the board;
a cover covering at least a portion of the circuitry; and
wherein the connector includes a conductive terminal electrically connected to the circuitry;
wherein the conductive terminal includes a portion that extends in a first direction along the board and is accessible from an outside of the space through an opening formed in the housing;
wherein the housing has a guide groove extending in the first direction; and
wherein the cover has a flange portion disposed in the guide groove.

20. The device according to claim 19,
wherein the connector has a protrusion that extends in a second direction intersecting the first direction and engages with the cover.

21. The device according to claim 19 or 20,
wherein a width of the guide groove in a second direction intersecting the first direction is narrowed as approaching the opening.

22. The device according to claim 21,
wherein the second direction corresponds to a vertical direction;
wherein the guide groove has a flat face and a sloped face facing each other in the vertical direction; and
wherein the flat face is located in a lower side relative to the vertical direction.

23. The device according to any one of claims 19 to 22, further comprising:
a fastening member fastening the cover with the housing along the first direction.

24. The device according to any one of claims 19 to 23, further comprising:
a sealing member disposed between the connector housing and the opening.

25. The device according to any one of claims 19 to 24,
wherein the driven element is a light source.

26. The device according to any one of claims 19 to 25, being adapted to be installed in a mobility.
